# EUROPÄISCHE PATENTSCHRIFT

(11) **EP 2 583 882 B1**
(45) Veröffentlichungstag und Bekanntmachung des Hinweises auf die Patenterteilung: **27.04.2016**
(21) Anmeldenummer: 12185038.2
(22) Anmeldetag: 19.09.2012
(51) Int. Cl.: B62D 9/00

(54) **Verfahren und Vorrichtung zum Betreiben eines Kraftfahrzeugs**
Method and device for operating a motor vehicle
Procédé et dispositif destinés au fonctionnement d'un véhicule automobile

(30) Priorität: 19.10.2011 DE 102011084765
(43) Veröffentlichungstag der Anmeldung: 24.04.2013
(73) Patentinhaber: ROBERT BOSCH GMBH, 70442 Stuttgart (DE)
(72) Erfinder: Bsul, Jihad, 76344 Eggenstein-Leopoldshafen (IL); Martin, Norbert, 77855 Achern (DE)

(56) Entgegenhaltungen:
- DE-A1-102008 049 992
- US-A1- 2005 236 896

## Beschreibung

Die Erfindung betrifft ein Verfahren sowie eine Vorrichtung zum Betreiben eines Kraftfahrzeugs, das mindestens zwei Achsen mit jeweils mindestens zwei Rädern und zum individuellen Antrieb für jedes der Räder jeweils eine elektrische Maschine aufweist, sowie eine Lenkeinrichtung, die ein Lenkrad zum Bestimmen eines Lenkwinkels von den Rädern zumindest einer der Achsen, wobei das Lenkrad in jede Lenkrichtung bis zu einem maximalen Lenkradwinkel drehbar ist.

### Stand der Technik

Verfahren und Vorrichtungen zum Betreiben von Kraftfahrzeugen, insbesondere zum Einleiten oder Durchführen eines Lenkvorgangs, sind aus dem Stand der Technik bekannt. Bei konventionellen Kraftfahrzeugen ist zumindest eine Achse des Kraftfahrzeugs lenkbar, wobei im Kontext dieser Erfindung unter einer Achse des Kraftfahrzeugs nicht eine starre Achse zu verstehen ist, sondern das Konstrukt aus zumindest zwei Rädern, die per Einzelradaufhängung oder auch über eine gemeinsame Achse an der Karosserie des Kraftfahrzeugs gehalten sein können und bezüglich einer Längsachse des Fahrzeugs gegenüberliegend angeordnet sind. Üblicherweise ist eine der Achsen als Antriebsachse ausgebildet, sodass ihr eine Antriebsvorrichtung zugeordnet ist. Wobei eine andere der Achsen oder die Antriebsachse selbst gleichzeitig als Lenkachsen ausgebildet ist. Insbesondere bei Kraftfahrzeugen, bei denen die gelenkten beziehungsweise lenkbaren Achsen gleichzeitig auch Antriebsachsen bilden, ist eine Einschränkung des einstellbaren Lenkwinkels durch die Systemeigenschaften der Radaufhängung und -lenkung bedingt. Die dadurch beschränkte Manövrierbarkeit macht sich insbesondere bei niedrigen Geschwindigkeiten bemerkbar, beispielsweise bei einem Einparkvorgang, bei dem hohe Gierraten beziehungsweise ein kleiner Wendekreis von Vorteil sind.

Um eine Beschädigung der lenkbaren Achse beziehungsweise der Räder zu vermeiden, ist üblicherweise die Lenkeinrichtung derart ausgelegt, dass das Lenkrad in jede Richtung bis zu einem maximalen Lenkradwinkel verdrehbar ist, ab welchem ein Weiterdrehen des Lenkrads nicht möglich ist.

Es sind bereits Ansätze bekannt, mit denen der begrenzte Lenkwinkel umgangen und damit die einstellbare Gierrate vergrößert werden soll, wie beispielsweise aus den Patentschriften EP 1 415 888 B1 oder EP 1 700 773 B1, die jedoch aufwendige mechanische und/oder elektronische Lösungen vorsehen.

Auch sind Antriebssysteme bekannt, bei denen jedes Rad eines Kraftfahrzeugs mit einem eigenen Elektromotor versehen ist, sodass ein radindividueller Antrieb erfolgt.

Ein derartiges Antriebssystem ist beispielsweise aus der US 2005/0236896 A1 bekannt, bei welchem in Abhängigkeit von einem auf ein Lenkrad aufgebrachtes Drehmoment Bremsmomente vorgegeben werden.

### Offenbarung der Erfindung

Das erfindungsgemäße Verfahren mit den Merkmalen des Anspruchs 1 sieht vor, dass bei Erreichen des maximalen Lenkradwinkels eine auf das Lenkrad aufgebrachte Kraft erfasst und in Abhängigkeit von der aufgebrachten Kraft die elektrischen Maschinen individuell zum Vergrößern der Gierrate angesteuert werden. Das Verfahren sieht also vor, dass eine auf das Lenkrad aufgebrachte Kraft vorzugsweise mittels eines entsprechenden Sensors erfasst wird, wenn das Lenkrad bis zu dem maximalen Lenkradwinkel gedreht wurde. Insbesondere wird die Kraft dann erfasst, wenn das Lenkrad bis zu einem den maximalen Lenkradwinkel bestimmenden Anschlag gedreht wurde. In Abhängigkeit der auf das sich am Anschlag befindlichen Lenkrad aufgebrachten Kraft werden erfindungsgemäß die elektrischen Maschinen, die im Übrigen zum Antreiben des Kraftfahrzeugs als Antriebsvorrichtung dienen, Rad-individuell zum Vergrößern der Gierrate angesteuert. Dies erfolgt vorzugsweise dadurch, dass eines oder mehrere der Räder auf der Innenseite der Kurve mit einem geringeren Drehmoment als die Räder auf der Außenseite der Kurve angetrieben werden.

Dadurch wird die Gierrate wie bei einem Kettenfahrzeug durch seitenindividuelle Antriebsgeschwindigkeiten und/oder Drehmomente vergrößert und dadurch der Wendekreis verkleinert beziehungsweise die Gierrate vergrößert. Somit wird auf einfache Art und Weise trotz beschränktem Lenkwinkel der Räder ein Vergrößern der Gierrate ermöglicht.

Vorzugsweise werden die Räder - wie bereits erwähnt - mittels der elektrischen Maschinen im Sinne eines Kettenfahrzeugs zum Vergrößern der Gierrate angesteuert. Es ist aber auch denkbar, die Räder auf einer Längsseite des Fahrzeugs mit unterschiedlichen Drehmomenten zu beaufschlagen, um die Gierrate weiter zu beeinflussen.

Gemäß einer vorteilhaften Weiterbildung der Erfindung ist vorgesehen, dass bei Erreichen des maximalen Lenkradwinkels das auf die Lenkeinrichtung aufgebrachte Drehmoment erfasst wird. Hierzu kann beispielsweise ein Drehmomentsensor oder ein Kraftsensor an entsprechender Stelle des Lenkrads eingebracht sein. Auch kann der mechanische Anschlag, der den maximalen Lenkradwinkel bestimmt, mit einem entsprechenden Sensorelement versehen sein, um die auf das Lenkrad aufgebrachte Drehkraft zu erfassen und dadurch das Drehmoment zu berechnen/bestimmen. Hierdurch wird gewährleistet, dass das Drehmoment stets dann erfasst wird, wenn der Anschlag beziehungsweise der maximale Lenkradwinkel erreicht wurde.

Vorzugsweise werden die elektrischen Maschinen zum Vergrößern der Gierrate angesteuert, wenn das erfasste Drehmoment beziehungsweise die erfasste Kraft eine vorgebbare Drehmomentgrenze beziehungsweise eine vorgebbare Kraftgrenze überschreitet. So muss der Fahrer des Fahrzeugs zunächst eine bestimmte Mindestkraft aufbringen, bevor die Lenkeinrichtung die Gierrate erhöht. Dadurch wird verhindert, dass die Gierrate für den Fahrer überraschend beziehungsweise in einer unerwünschten Situation erhöht wird.

Weiterhin ist bevorzugt vorgesehen, dass zum Vergrößern der Gierrate die Räder auf gegenüberliegenden Seiten einer Längsachse des Kraftfahrzeugs mit unterschiedlichen, insbesondere entgegengesetzten Drehmomenten beaufschlagt werden. Dies entspricht im Grunde genommen dem Ansteuern der elektrischen Maschinen im Sinne eines Kettenfahrzeugs. Durch Ansteuern mit entgegengesetzten Drehmomenten werden die Räder auf einer Längsseite des Fahrzeugs gebremst und im Extremfall in die entgegengesetzte Richtung angetrieben, wodurch eine besonders große Gierrate des Fahrzeugs erreicht wird.

Erfindungsgemäß ist vorgesehen, dass die elektrischen Maschinen nur unterhalb einer vorgebbaren Grenzgeschwindigkeit des Kraftfahrzeugs entsprechend individuell zum Vergrößern der Gierrate angesteuert werden. Es ist also vorgesehen, dass zunächst eine Grenzgeschwindigkeit unterschritten werden muss, bevor die Gierrate des Kraftfahrzeugs bei Erreichen des maximalen Lenkradwinkels vergrößert wird. Dadurch wird sichergestellt, dass die Gierrate der elektrischen Maschinen nur in Geschwindigkeitsbereichen vergrößert werden kann, in denen es auch sinnvoll und für die Insassen des Fahrzeugs sicher ist. Ein unkontrolliertes Einsetzen der Gierratenvergrößerung, beispielsweise in Gefahrensituationen, in denen der Fahrer plötzlich gegenlenkt, um einem Schleudervorgang entgegenzuwirken, ist damit wirkungsvoll ausgeschlossen.

Erfindungsgemäß wird die Grenzgeschwindigkeit in Abhängigkeit der sogenannten Eckdrehzahl der elektrischen Maschinen vorgegeben. Weiterhin ist bevorzugt vorgesehen, dass die elektrischen Maschinen in Abhängigkeit vom Ladezustand mindestens eines den elektrischen Maschinen zugeordneten elektrischen Speichers, insbesondere Batterie, angesteuert werden. Dabei ist insbesondere vorgesehen, dass die erlaubten Drehzahlen und/oder Drehmomente der elektrischen Maschinen in Abhängigkeit der Kapazität oder des Ladezustands der Batterie beschränkt werden. Durch eine permanente Beschränkung der Drehzahlen und/oder Drehmomente der elektrischen Maschinen auf einem bestimmten Bereich, insbesondere unterhalb der Eckdrehzahl, der auch bei niedrigen Ladezuständen der Batterie noch eine volle Funktionsfähigkeit zur Vergrößerung der Gierrate erlaubt, wird sichergestellt, dass das vorteilhafte Verfahren zu jedem Zeitpunkt durchführbar ist.

Die erfindungsgemäße Vorrichtung mit den Merkmalen des Anspruchs 5 weist eine Antriebsvorrichtung auf, die zum individuellen Antrieb für jedes der Räder jeweils eine elektrische Maschine aufweist, und eine Lenkeinrichtung, die ein Lenkrad zum Bestimmen eines Lenkwinkels von den Rädern zumindest einer der Achsen umfasst, wobei das Lenkrad in jede Lenkrichtung bis zu einem maximalen Lenkradwinkel drehbar ist. Die Lenkeinrichtung umfasst erfindungsgemäß Mittel zum Erfassen einer auf das Lenkrad aufgebrachten Kraft bei oder nach Erreichen des maximalen Lenkradwinkels, wobei die Lenkeinrichtung in Abhängigkeit der erfassten Kraft die elektrischen Maschinen individuell zum Vergrößern der Gierrate des Kraftfahrzeugs ansteuert. Als Mittel zum Erfassen der aufgebrachten Kraft sind vorzugsweise die oben bereits genannten Sensoren vorgesehen. Der maximale Lenkradwinkel wird vorzugsweise durch einen mechanischen Anschlag des Lenkrads bestimmt, sodass ein Verdrehen des Lenkrads über den maximalen Lenkradwinkel hinaus mechanisch verhindert wird. Dadurch ist es dem Fahrer des Kraftfahrzeugs möglich, ein entsprechendes Drehmoment auf das Lenkrad aufzubringen, wenn sich das Lenkrad an dem Anschlag befindet. Überschreitet das aufgebrachte Drehmoment beziehungsweise die aufgebrachte Kraft einen vorgebbaren Grenzwert, so wird, wie oben beschrieben, die Gierrate des Kraftfahrzeugs durch Rad-individuelle Ansteuerung der elektrischen Maschinen vergrößert. Weitere Merkmale und Vorteile ergeben sich aus dem zuvor Beschriebenen sowie aus den Ansprüchen.

Im Folgenden soll die Erfindung anhand der Zeichnung näher erläutert werden. Dazu zeigen
- Figur 1: eine Vorrichtung zum Betreiben eines Kraftfahrzeugs,
- Figur 2: Kurvenradien im Verhältnis zur Geschwindigkeit, und
- Figur 3: die Verringerung von Kurvenradien im Verhältnis zur Geschwindigkeit.

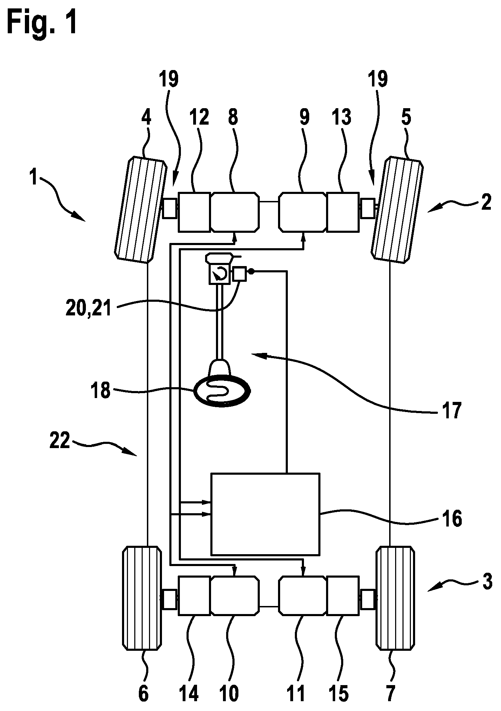

Figur 1 zeigt in einer vereinfachten Darstellung ein Kraftfahrzeug 1, das als Achsen eine Vorderachse 2 sowie eine Hinterachse 3 aufweist. Jeder Achse 2,3 sind zwei Räder 4,5 beziehungsweise 6,7 zugeordnet. Jedem der Räder 4-7 ist jeweils eine elektrische Maschine 8,9,10 und 11 zugeordnet. Das durch die jeweilige elektrische Maschine 8-11 bereitgestellte Drehmoment wird mittels jeweils eines Getriebes 12,13,14 und 15 auf die Räder übertragen. Die elektrischen Maschinen 8-11 sind mit einer Steuereinheit 16 verbunden. Die Steuereinheit 16 bildet einen Bestandteil einer Lenkeinrichtung 17 des Kraftfahrzeugs 1, die außerdem ein von dem Fahrer bedienbares Lenkrad 18 aufweist, welches in jeder Lenkrichtung bis zu einem maximalen Lenkwinkel verdrehbar ist. Erreicht das Lenkrad den maximalen Lenkradwinkel wird ein Weiterdrehen des Lenkrads 18 mechanisch, beispielsweise durch einen formschlüssigen Anschlag, verhindert. Das Lenkrad 18 ist mechanisch und/oder signaltechnisch mit einer Lenkung 19 des Kraftfahrzeugs 1 verbunden, welche der Vorderachse 2 zugeordnet ist, sodass bei Verdrehen des Lenkrads 18 um einen bestimmten Lenkradwinkel die Räder 4 und 5 einen entsprechenden Winkel bezüglich der Längsachse des Kraftfahrzeugs 1 geschwenkt beziehungsweise gelenkt werden. Der maximale Lenkradwinkel ist zweckmäßigerweise in Abhängigkeit der mechanischen Möglichkeiten der Lenkung 19 vorgegeben, die üblicherweise nur einen begrenzten Lenkbereich ermöglicht. Um ein Überlenken zu verhindern, das zu einer Beschädigung der Lenkung 19 führen könnte, ist die mechanische Lenkbegrenzung beziehungsweise der maximale Lenkradwinkel entsprechend vorgegeben.

Dem Lenkrad 18 ist weiterhin ein Mittel 20 zum Erfassen einer auf das Lenkrad 18 aufgebrachten Kraft zugeordnet. Das Mittel 20 ist als Kraftsensor 21 ausgebildet und einer Lenkradwelle derart zugeordnet, dass er die auf das Lenkrad 18 aufgebrachte Kraft dann erfasst, wenn das Lenkrad 18 ihren maximalen Lenkradwinkel erreicht hat, wenn also der Fahrer das Lenkrad bis zum Anschlag gedreht hat und weiterhin eine Kraft beziehungsweise ein Drehmoment in Richtung des Anschlags aufbringt.

In Abhängigkeit der auf das Lenkrad 18 aufgebrachten Kraft steuert die Steuereinrichtung 16 die elektrischen Maschinen 8 bis 11 zum Vergrößern der Gierrate des Kraftfahrzeugs 1 an, wenn die erfasste aufgebrachte Kraft einen vorgebbaren Grenzwert überschreitet. Dann werden die elektrischen Maschinen 8 bis 11 Rad-individuell derart angesteuert, dass die Räder 5 und 7, die auf dem vorherigen Ausführungsbeispiel auf der Innenseite der Kurve liegen, mit einem geringeren Drehmoment beaufschlagt werden als die Räder 4 und 6, die auf der Außenseite der Kurve liegen. Alternativ ist es denkbar, die Räder 5 und 7 mit einem den Rädern 4 und 6 entgegengesetzten Drehmoment zu beaufschlagen, um die Gierrate weiter zu vergrößern. Die Steuereinheit 16 überführt somit die Ansteuerung der elektrischen Maschinen 8 und 11 in eine Art Kettenfahrzeug-Betrieb, wenn mittels des Sensors 21 erfasst wird, dass der Fahrer des Kraftfahrzeugs 1 eine über die durch den mechanisch möglichen Lenkradwinkel vorgebbare Gierrate hinaus gehende Gierrate wünscht.

Im Normalbetrieb wird der Fahrer des Fahrzeugs den Lenkradwinkel immer so weit erhöhen, bis der gefahrene Radius, also die aktuelle Gierrate, seinem Wunsch entspricht. Ist der maximale Lenkradwinkel erreicht, wird der Fahrer bei Nicht-Übereinstimmung der aktuellen Gierrate mit seinem Fahrwunsch intuitiv und mit Nachdruck versuchen, gegen den mechanischen Anschlag des Lenkrads 18 weiter einzuschlagen und bewirkt damit eine durch den Sensor 21 messbare Kraft beziehungsweise ein messbares Drehmoment, insbesondere auf das Lenkgetriebe. Diese Kraft wird als Signal dazu benutzt, die Gierrate weiter entsprechend dem oben beschriebenen Verfahren zu erhöhen. Zusätzlich zu dem oben beschriebenen Verfahren, bei welchem die elektrischen Maschinen 9,11 und 8,10 auf den gegenüberliegenden Seiten der Längsachse des Kraftfahrzeugs 1 mit unterschiedlichen Drehmomenten beaufschlagt werden, ist es auch denkbar, die Drehmomente von den elektrischen Maschinen 8,9 der Vorderachse und der elektrischen Maschinen 10,11 zusätzlich zu beeinflussen.

Die Lenkeinrichtung 17, die Steuereinheit 16 sowie die elektrischen Maschinen 8,9,10 und 11 bilden somit eine Vorrichtung 22, die eine über den maximalen Lenkwinkel beziehungsweise Lenkradwinkel hinaus gehende Gierrate ermöglicht.

Da Kraftfahrzeuge bekannt sind, bei denen jedem Rad eine eigene elektrische Maschine zugeordnet ist, können das beschriebene Verfahren sowie die Vorrichtung auf einfache Art in Kraftfahrzeuge implementiert werden, ohne dass zusätzliche Aktuatoren oder aufwendige mechanische Lösungen eingesetzt werden müssen. Insbesondere ist bis auf das Vorsehen des Sensors 21 keine Modifikation des Lenkgetriebes erforderlich. Auch ändert sich in dem Lenkradwinkelbereich vor Erreichen des maximalen Lenkradwinkels die Charakteristik der Lenkung nicht. Die vorgeschlagene Lösung ist vollständig kompatibel zu eventuell vorhandenen hydraulischen oder elektrischen Hilfskraft-Lenksystemen und kann auch ohne diese arbeiten. Durch die Kettenantriebähnliche Lenkweise wird zudem das Nachschleppen der Räder 6,7 der Hinterachse 3 in den Kurvenradius hinein verringert und die Manövrierbarkeit zusätzlich erleichtert.

Anstelle des Kraftsensors 21 ist es auch denkbar, einen Drehmomentsensor vorzusehen und entsprechend der Lenkradachse oder dem Lenkrad zuzuordnen.

Die Steuereinheit 16 prüft im Betrieb die Fahrzeuggeschwindigkeit und vergleicht sie mit einer vorgebbaren Grenzgeschwindigkeit. Nur wenn die aktuelle Fahrzeuggeschwindigkeit unterhalb der Grenzgeschwindigkeit liegt, erhöht sie die Gierrate des Kraftfahrzeugs 1 über den mechanischen maximalen Lenkradwinkel hinaus. Besonders bevorzugt wird die vorgebbare Grenzgeschwindigkeit in Abhängigkeit der sogenannten Eckdrehzahl einer elektrischen Maschine vorgegeben, sodass nur wenn die Drehzahl der elektrischen Maschinen unterhalb der Eckdrehzahl liegt, ein Vergrößern der Gierrate durchgeführt wird. Darüber hinaus wird der Ladezustand einer wiederaufladbaren Batterie, die den elektrischen Motoren 8 bis 11 zugeordnet ist, bei der Vorgabe der Grenzgeschwindigkeit mit berücksichtigt, um sicherzustellen, dass die Funktion in jedem Fall verfügbar ist. Insbesondere wird hierdurch sichergestellt, dass auch bei niedrigem Ladezustand der Batterie die vorteilhafte Manövrierfähigkeit des Kraftfahrzeugs erhalten bleibt. Durch die Berücksichtigung der Grenzgeschwindigkeit wird zum anderen gewährleistet, dass die beschriebene Funktion nur dann eingesetzt wird, wenn dies auch sinnvoll und sicher ist. Ein unkontrolliertes Einsetzen beziehungsweise eine unkontrollierte Erhöhung der Gierrate, beispielsweise in einer Gefahrensituation, wird damit wirkungsvoll ausgeschlossen.

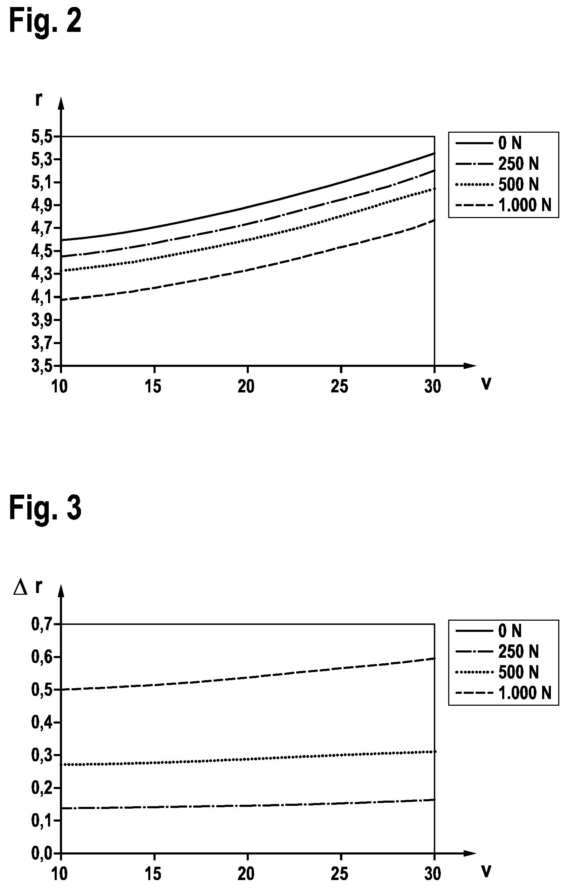

Figur 2 zeigt in einem Diagramm den Kurvenradius r (m) des Kraftfahrzeugs 1 über die Geschwindigkeit v (km/h). Dabei sind mehrere Kurvenradien bei unterschiedlichen, durch den Sensor 21 erfassten Kräften (N) dargestellt für ein Kraftfahrzeug mit 1000 kg Gewicht bei Lenkeinschlag der Räder 4,5 von 30° bezüglich der Längsachse des Kraftfahrzeugs 1. Es ist zu erkennen, dass durch die Erfindung die Kurvenradien r mit zunehmender Kraft durch die Vergrößerung der Gierrate verkleinert werden.

Figur 3 zeigt die Verringerung der Kurvenradien Δr (m) über die Geschwindigkeit v (km/h) bezüglich des zu Figur 2 beschriebenen Ausführungsbeispiels. Der sich durch die vergrößerte Gierrate ergebende Lenkradius kann bis zu 10 % verkleinert werden, in Abhängigkeit der gewählten Fahrzeuggeschwindigkeit, des Fahrzeuggewichts und der Leistung der elektrischen Maschinen 8 bis 11. In dem vorliegenden Ausführungsbeispiel weisen die elektrischen Maschinen eine Leistung jeweils von 13 kW auf.

## Patentansprüche

1. Verfahren zum Betreiben eines Kraftfahrzeugs (1), das mindestens zwei Achsen (2,3) mit jeweils mindestens zwei Rädern (4-7) sowie zum individuellen Antrieb für jedes der Räder (4-7) jeweils eine elektrische Maschine (8-11) aufweist, sowie eine Lenkeinrichtung (17), die ein Lenkrad (18) zum Bestimmen eines Lenkwinkels von den Rädern (4,5) zumindest einer der Achsen (2), wobei das Lenkrad (18) in jede Lenkrichtung bis zu einem maximalen Lenkradwinkel drehbar ist, wobei bei Erreichen des maximalen Lenkradwinkels eine auf das Lenkrad (18) aufgebrachte Kraft erfasst und in Abhängigkeit von der aufgebrachten Kraft die elektrischen Maschinen (8-11) Rad-individuell zum Vergrößern der Gierrate angesteuert werden, **dadurch gekennzeichnet, dass** die elektrischen Maschinen (8-11) nur unterhalb einer vorgebbaren Grenzgeschwindigkeit des Kraftfahrzeugs (1), die in Abhängigkeit einer Eckdrehzahl der elektrischen Maschinen (8-11) vorgegeben wird, individuell zum Vergrößern der Gierrate angesteuert werden.

2. Verfahren nach Anspruch 1, **dadurch gekennzeichnet, dass** bei Erreichen des maximalen Lenkradwinkels das auf die Lenkeinrichtung (17) aufgebrachte Drehmoment erfasst wird.

3. Verfahren nach einem der vorhergehenden Ansprüche, **dadurch gekennzeichnet, dass** die elektrischen Maschinen (8-11) zum Vergrößern der Gierrate angesteuert werden, wenn das erfasste Drehmoment eine vorgebbare Drehmomentgrenze überschreitet.

4. Verfahren nach einem der vorhergehenden Ansprüche, **dadurch gekennzeichnet, dass** zum Vergrößern der Gierrate die Räder (4-7) auf gegenüberliegenden Seiten einer Längsachse des Kraftfahrzeugs (1) mit unterschiedlichen, insbesondere entgegengesetzten Drehmomenten beaufschlagt werden.

5. Vorrichtung (22) zum Betreiben eines Kraftfahrzeugs (1), das mindestens zwei Achsen (2,3) mit jeweils mindestens zwei Rädern (4-7) umfasst, mit einer Antriebsvorrichtung, die zum individuellen Antrieb für jedes der Räder jeweils eine elektrische Maschine (8-11) aufweist, und mit einer Lenkeinrichtung (17), die ein Lenkrad (18) zum Bestimmen eines Lenkwinkels von den Rädern (4,5) zumindest einer der Achsen (2) aufweist, wobei das Lenkrad (18) in jede Lenkrichtung bis zu einem maximalen Lenkradwinkel drehbar ist, wobei die Lenkeinrichtung (17) Mittel (20) zum Erfassen einer auf das Lenkrad (18) aufgebrachten Kraft bei Erreichen des maximalen Lenkradwinkels aufweist und in Abhängigkeit der erfassten Kraft die elektrischen Maschinen (8-11) individuell zum Vergrößern der Gierrate ansteuert, **dadurch gekennzeichnet, dass** die elektrischen Maschinen (8-11) nur unterhalb einer vorgebbaren Grenzgeschwindigkeit des Kraftfahrzeugs (1), die in Abhängigkeit einer Eckdrehzahl der elektrischen Maschinen (8-11) vorgegeben wird, individuell zum Vergrößern der Gierrate angesteuert werden.

## Claims

1. Method for operating a motor vehicle (1), which motor vehicle has at least two axles (2, 3) with in each case at least two wheels (4-7) and in each case one electric machine (8-11) for the individual drive of each of the wheels (4-7), and which motor vehicle has a steering device (17) which has a steering wheel (18) for defining a steer angle of the wheels (4, 5) of at least one of the axles (2), wherein the steering wheel (18) can be rotated in each steering direction as far as a maximum steering wheel angle, wherein, when the maximum steering wheel angle is reached, a force applied to the steering wheel (18) is detected, and in a manner dependent on the applied force, the electric machines (8-11) are actuated on a wheel-specific basis in order to increase the yaw rate, **characterized in that** the electric machines (8-11) are actuated individually in order to increase the yaw rate only below a predefinable threshold speed of the motor vehicle (1), which is predefined in a manner dependent on a transition speed of the electric machines (8-11).

2. Method according to Claim 1, **characterized in that**, when the maximum steering wheel angle is reached, the torque applied to the steering device (17) is detected.

3. Method according to one of the preceding claims, **characterized in that** the electric machines (8-11) are actuated in order to increase the yaw rate if the detected torque exceeds a predefinable torque threshold.

4. Method according to one of the preceding claims, **characterized in that**, to increase the yaw rate, the wheels (4-7) on opposite sides of a longitudinal axis of the motor vehicle (1) are subjected to different, in particular opposing torques.

5. Device (22) for operating a motor vehicle (1), which motor vehicle has at least two axles (2, 3) with in each case at least two wheels (4-7) and in each case one electric machine (8-11) for the individual drive of each of the wheels (4-7), and which motor vehicle has a steering device (17) which has a steering wheel (18) for defining a steer angle of the wheels (4, 5) of at least one of the axles (2), wherein the steering wheel (18) can be rotated in each steering direction as far as a maximum steering wheel angle, wherein the steering device (17) has means (20) for detecting a force applied to the steering wheel (18) when the maximum steering wheel angle is reached, and said steering device actuates the electric machines (8-11) individually in order to increase the yaw rate in a manner dependent on the detected force, **characterized in that** the electric machines (8-11) are actuated individually in order to increase the yaw rate only below a predefinable threshold speed of the motor vehicle (1), which is predefined in a manner dependent on a transition speed of the electric machines (8-11).

## Revendications

1. Procédé de fonctionnement d'un véhicule automobile (1), qui présente au moins deux essieux (2, 3) équipés chacun d'au moins deux roues (4-7) ainsi qu'un moteur électrique respectif (8-11) pour l'entraînement individuel de chacune des roues (4-7), ainsi qu'un système de direction (17), qui comprend un volant de direction (18) pour déterminer un angle de braquage des roues (4, 5) d'au moins un des essieux (2), dans lequel le volant de direction (18) peut tourner dans chaque sens de braquage jusqu'à un angle maximal du volant de direction, dans lequel, après avoir atteint l'angle maximal du volant de direction (18), on détecte une force appliquée au volant de direction (18) et on fait démarrer les moteurs électriques (8-11) de façon individuelle par roue, en fonction de la force appliquée au volant de direction (18), afin d'augmenter le taux de lacet, **caractérisé en ce que** l'on ne fait démarrer les moteurs électriques (8-11) de façon individuelle pour augmenter le taux de lacet qu'en dessous d'une vitesse limite prédéfinie du véhicule automobile (1), qui est prédéterminée en fonction d'une vitesse de transition des moteurs électriques (8-11).

2. Procédé selon la revendication 1, **caractérisé en ce que** l'on détecte le couple de rotation appliqué au système de direction (17) lorsque l'on atteint l'angle maximal du volant de direction.

3. Procédé selon l'une quelconque des revendications précédentes, **caractérisé en ce que** l'on fait démarrer les moteurs électriques (8-11) pour augmenter le taux de lacet, lorsque le couple de rotation détecté dépasse une limite de couple de rotation prédéfinie.

4. Procédé selon l'une quelconque des revendications précédentes, **caractérisé en ce que**, pour augmenter le taux de lacet, on applique aux roues (4-7) des couples de rotation différents, en particulier opposés, sur des côtés opposés d'un axe longitudinal du véhicule automobile (1).

5. Dispositif (22) pour le fonctionnement d'un véhicule automobile (1), qui comprend au moins deux essieux (2, 3) équipés chacun d'au moins deux roues (4-7), avec un dispositif d'entraînement, qui présente respectivement un moteur électrique (8-11) pour l'entraînement individuel de chacune des roues, et avec un système de direction (17), qui présente un volant de direction (18) pour déterminer un angle de braquage des roues (4, 5) d'au moins un des essieux (2), dans lequel le volant de direction (18) peut tourner dans chaque sens de braquage jusqu'à un angle maximal du volant de direction, dans lequel le système de direction (17) présente des moyens (20) pour la détection d'une force appliquée au volant de direction (18) lorsque l'on atteint l'angle maximal du volant de direction et fait démarrer individuellement les moteurs électriques (8-11) pour augmenter le taux de lacet en fonction de la force détectée, **caractérisé en ce que** les moteurs électriques (8-11) ne démarrent individuellement pour augmenter le taux de lacet qu'en dessous d'une vitesse limite prédéfinie du véhicule automobile (1), qui est prédéterminée en fonction d'une vitesse de transition des moteurs électriques (8-11).
